# EUROPÄISCHE PATENTSCHRIFT

(11) **EP 2 298 636 B1**
(45) Veröffentlichungstag und Bekanntmachung des Hinweises auf die Patenterteilung: **14.11.2012**
(21) Anmeldenummer: 10175691.4
(22) Anmeldetag: 08.09.2010
(51) Int. Cl.: B62M 11/14, B62M 6/20, B62M 6/55

(54) **Getriebeanordnung für ein mit einem Hilfsantrieb ausgestattetes Fahrrad**
Gear assembly for a bicycle with an auxiliary drive
Dispositif de transmission pour un vélo équipé d'un entraînement auxiliaire

(30) Priorität: 18.09.2009 DE 102009042232
(43) Veröffentlichungstag der Anmeldung: 23.03.2011
(73) Patentinhaber: Schaeffler Technologies AG & Co. KG, 91074 Herzogenaurach (DE)
(72) Erfinder: Mensch, Sergej, 97525, Schwebheim (DE); Neubauer, Markus, 96365, Nordhalben (DE); Pausch, Michael, 97464, Oberwerrn (DE)

(56) Entgegenhaltungen:
- WO-A2-2009/010943
- DE-A1- 19 629 788
- DE-A1-102004 016 301

## Beschreibung

### Gebiet der Erfindung

Die vorliegende Erfindung betrifft eine Getriebeanordnung für ein mit einem Hilfsantrieb ausgestattetes Fahrrad.

Fahrräder mit einem Hilfsantrieb erfreuen sich immer größerer Beliebtheit, da sie die Fortbewegung, insbesondere für ältere Menschen, deutlich erleichtern. In der DE 197 28 253 C2 ist ein solches Fahrrad mit einem elektrischen Hilfsantrieb beschrieben. Das Fahrrad weist einen Pedalantrieb und einen motorbetriebenen Antrieb auf, wobei der motorbetriebene Antrieb einen elektrischen Motor umfasst. Dieser elektrische Motor ist derart aufgebaut, dass er den Pedalantrieb bei Bedarf unterstützen kann. In der DE 196 29 788 A1 ist eine gattungsgemäße Getriebeanordnung offenbart.

Das Gesamtgewicht eines Fahrrades sollte im Allgemeinen möglichst gering sein, da ein geringes Gewicht des Fahrrades die Handhabung und das Fahren des Fahrrades erleichtert. Bei einem Fahrrad mit Hilfsantrieb stellt dieser Hilfsmotor ein signifikantes Zusatzgeweicht dar. Daher ist es notwendig, das Gesamtgewicht insbesondere eines mit einem Hilfsantrieb ausgestatteten Fahrrads möglichst gering zu halten.

Die Aufgabe der Erfindung ist es daher, eine verbesserte und insbesondere gewichtsreduzierte Getriebeanordnung für ein mit einem Hilfsantrieb ausgestattetes Fahrrad zur Verfügung zu stellen.

Diese Aufgabe wird durch eine Getriebeanordnung mit den Merkmalen des Patentanspruchs 1 und/oder durch ein Fahrrad mit den Merkmalen des Anspruchs 13 gelöst.

Demgemäß ist vorgesehen:
Eine Getriebeanordnung für ein mit einem Hilfsantrieb ausgestattetes Fahrrad, mit einem Planetengetriebe, welches eine Vielzahl von Planetenräder und Planetenträger aufweist und welches dazu ausgelegt ist, ein Drehmoment des Hilfsantriebes auf eine pedale Antriebseinrichtung des Fahrrads zu übersetzen, mit einer Freilaufeinrichtung, über die das Drehmoment von dem Planetengetriebe auf die Antriebseinrichtung übertragbar ist und die hierzu eine an den Planetenträgern angeordnete erste Zahnscheibe und eine an der Antriebseinrichtung angeordnete und direkt gegenüberliegend zur ersten Zahnscheibe vorgesehene zweite Zahnscheibe aufweist.

Ferner ist ein Fahrrad vorgesehen, mit einem Rahmen, mit zumindest zwei an dem Rahmen drehbar angebrachten Rädern, mit einer pedalen Antriebseinrichtung, die zwei am Rahmen angebrachte, drehbar gelagerte Pedale aufweist, mit einem bedarfsweise zuschaltbaren Hilfsantrieb zum hilfsweise selbstständigen Antrieb des Fahrrads, mit einer Getriebeanordnung.

Durch den Einsatz eines Planetengetriebes kann der Bauraum für das Getriebe vorteilhafterweise sehr klein gehalten werden, da ein Planetengetriebe eine kompakte Bauweise ermöglicht und zudem ein großes Drehmoment übertragen kann. Ferner ist die verwendete Freilaufeinrichtung direkt in das Planetengetriebe integriert. Durch diese Funktionsintegration des Planetengetriebes und der Freilaufeinrichtung wird die Baugröße der Getriebeanordnung signifikant verringert und deren Teileanzahl minimiert. Des Weiteren ist der Materialaufwand und der Montageaufwand für eine solche Getriebeanordnung reduziert, da Material eingespart werden kann und weniger Teile montiert werden müssen. Dadurch bedingt lässt die erfindungsgemäße Getriebeanordnung auch gewichtsreduziert herstellen.

Durch die Freilaufeinrichtung kann der Fahrer des Fahrrades das Fahrrad über die pedale Antriebseinrichtung selbstständig antreiben. Der Hilfsantrieb und das Planetengetriebe beeinträchtigen bzw. bremsen dies dadurch nicht. Bei einer Zuschaltung des Hilfsantriebes greifen die beiden Zahnscheiben ineinander und ermöglichen so den motorischen Antrieb des Fahrrades.

Des Weiteren werden durch die geringe Baugröße und das reduzierte Gewicht der Getriebeanordnung die Handhabung und das Fahren des Fahrrades erleichtert. Außerdem können längere Strecken mit diesem Fahrrad zurückgelegt werden, ohne dass ein Aufladen eines Energiespeichers für den Hilfsantrieb notwendig ist.

Vorteilhafte Ausgestaltungen und Weiterbildungen ergeben sich aus den weiteren Unteransprüchen sowie aus der Beschreibung unter Bezugnahme auf die Figuren der Zeichnung.

In einer bevorzugten Ausführungsform sind die erste Zahnscheibe und die Planetenträger zusammen als einstückiges Teil ausgebildet. Durch diese Ausbildung kann der Montageaufwand für die gesamte Getriebeanordnung weiter reduziert werden. Die erste Zahnscheibe und die Planetenträger können z.B. mittels Druckguss gefertigt werden.

In einer weiteren bevorzugten Ausführungsform sind die zweite Zahnscheibe und die Antriebseinrichtung zusammen als einstückiges Teil ausgebildet. Auch durch diese Ausbildung kann der Montageaufwand reduziert werden. Die zweite Zahnscheibe und die Antriebseinrichtung können zusammen als ein einstückiges Teil z.B. gefräst werden.

In einer weiteren bevorzugten Ausführungsform ist ein federelastisches Element vorgesehen, mittels welchem die beiden Zahnscheiben aneinander pressbar sind. Das federelastische Element kann z.B. als Schraubenfeder und/oder Evolutfeder und/oder Elastomerfeder ausgebildet sein. Hierdurch wird sichergestellt, dass sich die erste Zahnscheibe, welche an den Planetenträgern angeordnet ist, und die zweite Zahnscheibe, welche an der pedalen Antriebseinrichtung angeordnet ist, sich bei einer Zuschaltung des Hilfsantriebes im Eingriff befinden.

In einer weiteren bevorzugten Ausführungsform ist das federelastische Element als Tellerfeder ausgebildet. Tellerfedern eigenen sich sehr gut, um die dynamischen Kräfte, welche von der Freilaufeinrichtung durch das Übereinandergleiten der Zahnflanken der beiden Zahnscheiben erzeugt werden und durch die Vorspannung der ersten Zahnscheibe entstehen, aufnehmen zu können. Ferner weist eine Tellerfeder auch ein geringes Geweicht und eine kleine Bauelement auf. Auch Kombinationen von Tellerfedern sind möglich und vorteilhaft.

In einer weiteren bevorzugten Ausführungsform weist die Getriebeanordnung zumindest ein erstes Wälzlager auf, über welche die Planetenräder in den Planetenträgern gelagert sind. Das Wälzlager kann z.B. als Kugellager, Rollenlager, Zylinderrollenlager und/oder Nadellager ausgebildet sein und die Normalkräfte und Momente gut aufnehmen.

In einer weiteren bevorzugten Ausführungsform sind die Planetenträger mittels zumindest eines Niets mit den Wälzlagern verbunden. Nieten haben ein geringes Gewicht und eine hohe Belastbarkeit und eigen sich daher hervorragend zur Verbindung des ersten Wälzlagers mit den Planetenträgern. Die Verbindung des ersten Wälzlagers mit den Planetenträgern kann jedoch ebenfalls mit einer kraftschlüssigen Verbindung, z.B. einer Schraubverbindung, oder einer stoffschlüssigen Verbindung, z.B. einer Hartlotverbindung und/oder Schweißverbindung, erfolgen

In einer weiteren bevorzugten Ausführungsform sind die Planetenträger in den Planetenrädern schwimmend gelagert. Die schwimmende Lagerung kann z.B. durch ein Nu-Zylinderrollenlager ausgebildet sein. Dadurch ist es möglich, dass sich die Planetenträger und die daran angeordnete erste Zahnscheibe axial verschieben können, um über die Zahnflanken der zweiten Zahnscheibe zu gleiten.

In einer weiteren bevorzugten Ausführungsform weist das Planetengetriebe zumindest zwei verschiedene Übersetzungsverhältnisse auf. Durch die verschiedenen Übersetzungsverhältnisse kann die Antriebseinrichtung optimal von dem Hilfsantrieb angetrieben werden, unabhängig von der Steigung und/oder des Gesamtgewichts des Fahrrades samt Fahrer.

In einer weiteren bevorzugten Ausführungsform ist die Getriebeanordnung aus einem Leichmetall, z.B. Aluminium, und/oder einem Kunststoff, z.B. Epoxidharz, ausgebildet. Durch die Ausbildung der Getriebeanordnung aus einem Leichtmetall und/oder einem Kunststoff kann die Getriebeanordnung besonders leicht ausgebildet sein. Dies trägt weiterhin zu einer Gewichtsreduzierung der Getriebeanordnung und des Fahrrades bei.

In einer weiteren bevorzugten Ausführungsform ist zumindest ein zweites Wälzlager vorgesehen, über welches die Abtriebseinrichtung gelagert ist. Das Wälzlager kann z.B. als Vierpunktlager ausgebildet sein und fixiert die Antriebseinrichtung fest in einem Gehäuse. Das Gehäuse kann z.B. ein Teil des Rahmens des Fahrrades sein.

In einer weiteren Ausgestaltung weisen die beiden Zahnscheiben ineinander greifbare Zahnflanken auf.

Die Zahnflanken der beiden Zahnscheiben können beispielsweise im Querschnitt trapezförmig oder dreieckförmig ausgebildet sein, wodurch bei zugeschaltetem Hilfsantrieb ein Eingreifen der ersten Zahnscheibe auf die zweite Zahnscheibe möglicht wird. Bei ausgeschaltetem Hilfsantrieb wird durch diese Formgebung der Zahnflanken ein Übereinandergleiten der beiden Zahnscheiben ermöglicht.

In einer weiteren bevorzugten Ausführungsform ist der Hilfsantrieb ein Elektromotor und/oder eine Brennkraftmaschine.

Die obigen Ausgestaltungen und Weiterbildungen lassen sich - sofern sinnvoll -beliebig miteinander kombinieren.

Die Erfindung wird im Folgenden anhand von Ausführungsbeispielen unter Bezugnahme auf die beiliegenden Figuren der Zeichnung näher erläutert. Von den Figuren zeigen:
- Figur 1: eine schematische Darstellung einer erfindungsgemäßen Ge- triebeanordnung;
- Figur 2: ein Schnittbild einer erfindungsgemäßen Getriebeanordnung;
- Figur 3: ein Fahrrad mit einer erfindungsgemäßen Getriebeanordnung.

In den Figuren der Zeichnung sind gleiche und funktionsgleiche Elemente und Merkmale - sofern nichts Anderes ausgeführt ist - mit denselben Bezugszeichen bezeichnet.

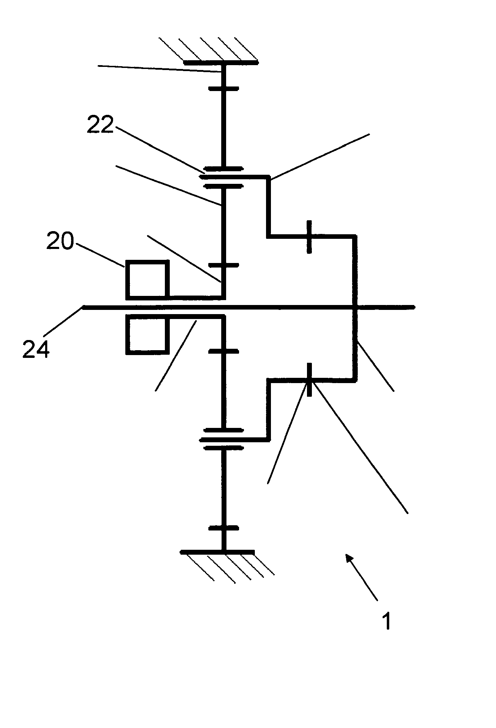

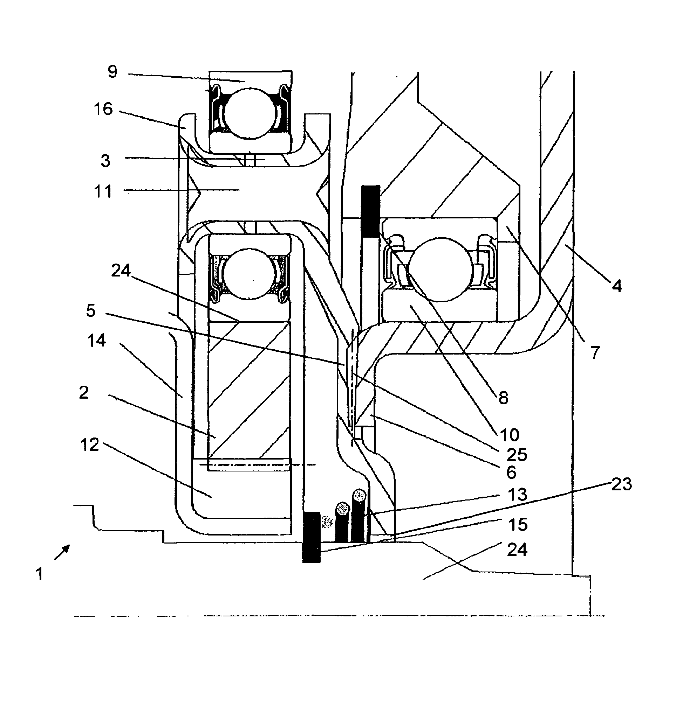

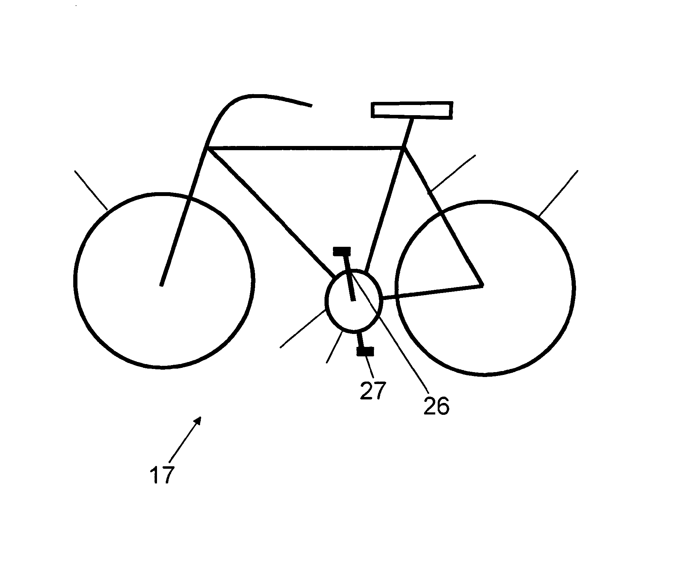

Figur 1 zeigt eine schematische Darstellung einer erfindungsgemäßen Getriebeanordnung 1. Die Getriebeanordnung 1 weist ein Planetengetriebe auf. Das Planetengetriebe weist ein Hohlrad 21 auf, welches in einem Gehäuse 7 (in Fig. 1 nicht dargestellt) drehfest fixiert ist. Das Gehäuse 7 kann beispielsweise in einem Rahmen 18 eines Fahrrades 17 angeordnet sein (siehe Fig. 2 und 3) oder ein Teil des Rahmens 18 sein. Ferner weist das Planetengetriebe ein Sonnenrad 12 auf, welches von der Hilfsantriebswelle 14 eines Hilfsantriebes 20 angetrieben wird. Zwischen dem Hohlrad 21 und dem Sonnenrad 12 sind eine Vielzahl von Planetenrädern 2 angeordnet. In der Mitte der Planetenräder 2 ist eine Ausnehmung 22 vorgesehen. Durch diese Ausnehmung 22 erstrecken sich die Planetenträger 3. Die Planetenräder 2 sind drehbar an den Planetenträgern 3 angeordnet, sodass eine Relativbewegung des Planetenrads 2 bezüglich des Planetenträgers 3 möglich ist. An den Planetenträgern 3 ist eine erste Zahnscheibe 5 angeordnet, welche drehfest mit den Planetenträgern 3 verbunden ist. Direkt gegenüber der ersten Zahnscheibe 5 ist eine zweite Zahnscheibe 6 angeordnet. Die zweite Zahnscheibe 6 ist an einer Antriebseinrichtung 4 angeordnet, welche mit einer Tretlagerwelle 24 gekoppelt ist und an der ein Kettenblatt angeordnet ist, welche dem Antrieb des Fahrrades 17 dienen. An der Tretlagerwelle 24 ist ferner eine Tretkurbel 26 (in Fig. 1 nicht dargestellt) angebracht, mit der die Antriebseinrichtung 4 auch von Muskelkraft betrieben werden kann.

Figur 2 zeigt ein Schnittbild durch eine erfindungsgemäße Getriebeanordnung 1, wie sie in Fig. 1 dargestellt ist. Die Getriebeanordnung 1 weist ein Planetengetriebe auf. Das Planetengetriebe umfasst ein Hohlrad 21 (in Fig. 2 nicht dargestellt), ein Sonnenrad 12 und eine Vielzahl von Planetenrädern 2 und Planetenträgern 3. Das Hohlrad 12 ist fest in einem Gehäuse 7 (in Fig. 2 nicht dargestellt) fixiert. Das Sonnenrad 12 ist auf einer Hilfsantriebswelle 14 des Hilfsantriebes 20 drehfest angeordnet. Das Sonnenrad 12 treibt das Planentenrad 2 an. Die Verzahnung des Hohlrades 21, des Sonnenrades 12 und der Planetenräder kann geradverzahnt oder schrägverzahnt sein. Das Planetenrad 2 weist in seiner Mitte eine Ausnehmung 22 auf. In dieser Ausnehmung 22 ist ein erstes Wälzlager 9 angeordnet, welches mit seinem Außenring in dem Planetenrad 2 fixiert ist. In dem Innenring des ersten Wälzlagers 9 ist der Planetenträger 3 mittels eines Niets 11 befestigt. Der Planetenträger 3 weist eine Schulter 16 auf, welche eine axial feste Anordnung des Innenrings bezüglich des Planetenträgers 3 ermöglicht.

Der Planetenträger 3 weist eine erste Zahnscheibe 5 auf. Der Planetenträger 3 und die erste Zahnscheibe 5 sind zusammen als ein einstückiges Teil ausgebildet. Die erste Zahnscheibe 5 weist in der Mitte ihres Durchmessers eine Ausnehmung 23 auf, durch welche sich die Tretlagerwelle 24 erstreckt. Der Durchmesser der Ausnehmung 23 ist etwas größer als der Durchmesser der Tretlagerwelle 24.

Zwischen dem Sonnenrad 12 und dem Bereich der ersten Zahnscheibe 5, welcher sich in der Nähe der Tretlagerwelle 24 befindet, ist ein federelastisches Element 13 angeordnet, welches dazu dient, die erste Zahnscheibe 5 gegen die zweite Zahnscheibe 6 zu drücken. Das federelastische Element 13 ist durch einen auf der Tretlagerwelle 24 angeordneten Sicherungsring 15 axial fixiert. Das federelastische Element 13 ist in diesem Ausführungsbeispiel als Schraubenfeder ausgebildet.

Die zweite Zahnscheibe 6 ist direkt gegenüber der ersten Zahnscheibe 5 angeordnet. Die zweite Zahnscheibe 6 ist mittels eines zweiten Wälzlagers 10 in einem Gehäuse 7 gelagert. Das zweite Wälzlager 10 ist als Vierpunktlager ausgebildet. Der Außenring des zweiten Wälzlagers 10 ist dabei in einem Gehäuse 7 befestigt. Zur axialen Fixierung des zweiten Wälzlagers 10 ist ein Sicherungsring 8 an dem Gehäuse 7 angeordnet.

In der Figur 3 ist schematisch ein Fahrrad mit einer erfindungsgemäßen Getriebeanordnung 1 dargestellt. Das Fahrrad 17 weist einen Rahmen 18 auf, an welchen zwei Räder 19 drehbar gelagert sind. Ferner weist das Fahrrad 17 einen Hilfsantrieb 20 und eine erfindungsgemäße Getriebeanordnung 1 auf. Des Weiteren weist das Fahrrad 17 eine Tretkurbel 26 auf, an welcher Pedale 27 angeordnet sind.

Obwohl die vorliegende Erfindung anhand eines bevorzugten Ausführungsbeispiels vorstehend beschrieben wurde, ist sie darauf nicht beschränkt, sondern lässt sich auf vielfältige Art und Weise modifizieren, ohne vom Gegenstand der Erfindung abzuweichen.

Beispielsweise ist das Material der Getriebeanordnung nicht auf bestimmte Materialien beschränkt. Die Getriebeanordnung könnte z.B. auch aus glasfaserverstärktem Kunststoff (GFK) ausgebildet sein.

Ferner ist Getriebeanordnung auch nicht notwendigerweise auf die Verwendung in einem Fahrrad mit einem Hilfsantrieb beschränkt, auch wenn diese eine sehr vorteilhafte und nicht naheliegende Anwendung darstellt. Diese Getriebeanordnung kann ebenfalls in anderen Vorrichtungen und Maschinen verwendet werden, in welchen ein Getriebe und eine Freilaufeinrichtung verwendet werden.

### Bezugszeichenliste

- 1: Getriebeanordnung
- 2: Planetenräder
- 3: Planetenträger
- 4: Antriebseinrichtung
- 5: erste Zahnscheibe
- 6: zweite Zahnscheibe
- 7: Gehäuse
- 8: Sicherungsring
- 9: erstes Wälzlager
- 10: zweites Wälzlager
- 11: Niet
- 12: Sonnenrad
- 13: federelastisches Element
- 14: Hilfsantriebwelle
- 15: Sicherungsring
- 16: Schulter
- 17: Fahrrad
- 18: Rahmen
- 19: Räder
- 20: Hilfsantrieb
- 21: Hohlrad
- 22: Ausnehmung
- 23: Ausnehmung
- 24: Tretlagerwelle
- 25: Verzahnungsfläche
- 26: Tretkurbel
- 27: Pedale

## Patentansprüche

1. Getriebeanordnung (1) für ein mit einem Hilfsantrieb (20) ausgestattetes Fahrrad (17),
mit einem Planetengetriebe, welches eine Vielzahl von Planetenräder (2) und Planetenträger (3) aufweist und welches dazu ausgelegt ist, ein Drehmoment des Hilfsantriebs (20) auf eine pedale Antriebseinrichtung (4) des Fahrrads (17) zu übersetzen,
mit einer Freilaufeinrichtung, über die das Drehmoment von dem Planetengetriebe auf die Antriebseinrichtung (4) übertragbar ist **dadurch gekennzeichnet, dass** die fuilanfeinrichtung zur drehmoment übertragung eine an den Planetenträgern (2) angeordnete erste Zahnscheibe (5) und eine an der Antriebseinrichtung (4) angeordnete und direkt gegenüberliegend zur ersten Zahnscheibe vorgesehene zweite Zahnscheibe (6) aufweist.

2. Getriebeanordnung nach Anspruch 1,
**dadurch gekennzeichnet,**
**dass** die erste Zahnscheibe (5) und die Planetenträger (3) zusammen als einstückiges Teil ausgebildet sind.

3. Getriebeanordnung nach einem der vorhergehenden Ansprüche,
**dadurch gekennzeichnet,**
**dass** die zweite Zahnscheibe (6) und die Antriebseinrichtung (4) zusammen als einstückiges Teil ausgebildet sind.

4. Getriebeanordnung nach einem der vorhergehenden Ansprüche,
**dadurch gekennzeichnet,**
**dass** ein federelastisches Element (13) vorgesehen ist, mittels welchem die beiden Zahnscheiben (5; 6) aneinander pressbar sind.

5. Getriebeanordnung nach Anspruch 4,
**dadurch gekennzeichnet,**
**dass** das federelastische Element (13) als Tellerfeder ausgebildet ist.

6. Getriebeanordnung nach einem der vorhergehenden Ansprüche, **dadurch gekennzeichnet, dass**
dass die Getriebeanordnung zumindest ein erstes Wälzlager (9) aufweist, über welches die Planetenräder (2) in den Planetenträgern (3) gelagert sind.

7. Getriebeanordnung nach Anspruch 6,
**dadurch gekennzeichnet,**
**dass** die Planetenträger (3) mittels zumindest eines Niets (11) mit dem zumindest einen ersten Wälzlager (9) verbunden ist.

8. Getriebeanordnung nach einem der vorhergehenden Ansprüche,
**dadurch gekennzeichnet,**
**dass** die Planetenräder (2) in den Planetenträger (3) schwimmend gelagert sind.

9. Getriebeanordnung nach einem der vorhergehenden Ansprüche,
**dadurch gekennzeichnet,**
**dass** das Planetengetriebe zumindest zwei verschiedene Übersetzungsverhältnisse aufweist.

10. Getriebeanordnung nach einem der vorhergehenden Ansprüche,
**dadurch gekennzeichnet,**
**dass** die Getriebeanordnung (1) aus einem Leichmetall, z.B. Aluminium, und/oder einem Kunststoff, z.B. Epoxidharz, ausgebildet ist.

11. Getriebeanordnung nach einem der vorhergehenden Ansprüche,
**dadurch gekennzeichnet,**
**dass** zumindest ein zweites Wälzlager (10) vorgesehen ist, über welches die Antriebseinrichtung (4) gelagert ist.

12. Getriebeanordnung nach einem der vorhergehenden Ansprüche,
**dadurch gekennzeichnet,**
**dass** die erste und die zweite Zahnscheibe (5; 6) ineinander greifbare Zahnflanken aufweisen, die im Querschnitt trapezförmig oder dreieckförmig ausgebildet sind.

13. Fahrrad (17),
mit einem Rahmen (18),
mit zumindest zwei an dem Rahmen (18) drehbar angebrachten Rädern (19),
mit einer pedalen Antriebseinrichtung (4), die zwei am Rahmen angebrachte, drehbar gelagerte Pedale (27) aufweist,
mit einem bedarfsweise zuschaltbaren Hilfsantrieb (20) zum hilfsweise motorbetriebenen Antrieb des Fahrrads (17),
mit einer Getriebeanordnung (1) nach einem der Ansprüche 1 bis 11.

14. Fahrrad nach Anspruch 13,
**dadurch gekennzeichnet,**
**dass** der Hilfsantrieb (20) ein Elektromotor und/oder eine Brennkraftmaschine ist.

## Claims

1. Gearing assembly (1) for a bicycle (17) equipped with an auxiliary drive (20),
having a planetary gear set which has a multiplicity of planet gears (2) and planet carriers (3) and which is designed to transmit a torque of the auxiliary drive (20) to a pedal drive device (4) of the bicycle (17),
having a freewheel device by means of which the torque can be transmitted from the planetary gear set to the drive device (4), **characterized in that** the freewheel device has, for the transmission of torque, a first toothed disc (5) which is arranged on the planet carriers (2) and a second toothed disc (6) which is arranged on the drive device (4) and which is provided directly opposite the first toothed disc.

2. Gearing assembly according to Claim 1,
**characterized**
**in that** the first toothed disc (5) and the planet carriers (3) are formed together as a single part.

3. Gearing assembly according to one of the preceding claims,
**characterized**
**in that** the second toothed disc (6) and the drive device (4) are formed together as a single part.

4. Gearing assembly according to one of the preceding claims,
**characterized**
**in that** a resiliently elastic element (13) is provided, by means of which the two toothed discs (5; 6) can be pressed against one another.

5. Gearing assembly according to Claim 4,
**characterized**
**in that** the resiliently elastic element (13) is in the form of a plate spring.

6. Gearing assembly according to one of the preceding claims,
**characterized**
**in that** the gearing assembly has at least one first rolling bearing (9) by means of which the planet gears (2) are mounted in the planet carriers (3).

7. Gearing assembly according to Claim 6,
**characterized**
**in that** the planet carriers (3) are connected to the at least one first rolling bearing (9) by means of at least one rivet (11).

8. Gearing assembly according to one of the preceding claims,
**characterized**
**in that** the planet gears (2) are mounted in a floating fashion in the planet carriers (3).

9. Gearing assembly according to one of the preceding claims,
**characterized**
**in that** the planetary gear set has at least two different transmission ratios.

10. Gearing assembly according to one of the preceding claims,
**characterized**
**in that** the gearing assembly (1) is formed from a light metal, for example aluminium, and/or a plastic, for example epoxy resin.

11. Gearing assembly according to one of the preceding claims,
**characterized**
**in that** at least one second rolling bearing (10) is provided, by means of which the drive device (4) is mounted.

12. Gearing assembly according to one of the preceding claims,
**characterized**
**in that** the first and the second toothed disc (5; 6) have tooth flanks which can mesh with one another and which are of trapezoidal or triangular form in cross section.

13. Bicycle (17),
having a frame (18),
having at least two wheels (19) attached to the frame (18) so as to be rotatable,
having a pedal drive device (4) which has two rotatably mounted pedals (27) attached to the frame,
having an auxiliary drive (20), which can be activated on demand, for the assistive motor-powered drive of the bicycle (17),
having a gearing assembly (1) according to one of Claims 1 to 11.

14. Bicycle according to Claim 13,
**characterized**
**in that** the auxiliary drive (20) is an electric motor and/or an internal combustion engine.

## Revendications

1. Agencement de transmission (1) pour une bicyclette (17) munie d'un entraînement auxiliaire (20), comprenant un engrenage planétaire qui présente une pluralité de pignons planétaires (2) et de porte-planétaires (3) et qui est conçu pour transférer un couple de l'entraînement auxiliaire (20) à un système d'entraînement (4) de la bicyclette (17),
comprenant un système de roue libre, par le biais duquel le couple peut être transmis de l'engrenage planétaire au système d'entraînement (4), **caractérisé en ce que** le système de roue libre pour le transfert de couple présente un premier disque denté (5) disposé sur les porte-planétaires (2) et un deuxième disque denté (6) disposé sur le système d'entraînement (4) et prévu directement en regard du premier disque denté.

2. Agencement de transmission selon la revendication 1,
**caractérisé en ce que**
le premier disque denté (5) et les porte-planétaires (3) sont réalisés ensemble d'une seule pièce.

3. Agencement de transmission selon l'une quelconque des revendications précédentes,
**caractérisé en ce que**
le deuxième disque denté (6) et le système d'entraînement (4) sont réalisés ensemble d'une seule pièce.

4. Agencement de transmission selon l'une quelconque des revendications précédentes,
**caractérisé en ce**
**qu'**un élément élastique à ressort (13) est prévu, au moyen duquel les deux disques dentés (5 ; 6) peuvent être pressés l'un contre l'autre.

5. Agencement de transmission selon la revendication 4,
**caractérisé en ce que**
l'élément élastique à ressort (13) est réalisé sous forme de ressort Belleville.

6. Agencement de transmission selon l'une quelconque des revendications précédentes,
**caractérisé en ce que**
l'agencement de transmission présente au moins un premier palier à roulement (9) par le biais duquel les pignons planétaires (2) sont supportés dans les porte-planétaires (3).

7. Agencement de transmission selon la revendication 6,
**caractérisé en ce que**
les porte-planétaires (3) sont connectés à l'au moins un premier palier à roulement (9) au moyen d'au moins un rivet (11).

8. Agencement de transmission selon l'une quelconque des revendications précédentes,
**caractérisé en ce que**
les pignons planétaires (2) sont montés de manière flottante dans les porte-planétaires (3).

9. Agencement de transmission selon l'une quelconque des revendications précédentes,
**caractérisé en ce que**
l'engrenage planétaire présente au moins deux rapports de transmission différents.

10. Agencement de transmission selon l'une quelconque des revendications précédentes,
**caractérisé en ce que**
l'agencement de transmission (1) est réalisé en un métal léger, par exemple de l'aluminium, et/ou en plastique, par exemple en résine époxy.

11. Agencement de transmission selon l'une quelconque des revendications précédentes,
**caractérisé en ce qu'**il est prévu au moins un deuxième palier à roulement (10), par le biais duquel le système d'entraînement (4) est supporté.

12. Agencement de transmission selon l'une quelconque des revendications précédentes,
**caractérisé en ce que**
le premier et le deuxième disque denté (5 ; 6) présentent des flancs de dents pouvant s'engager les uns dans les autres, qui sont réalisés sous forme trapézoïdale ou triangulaire en section transversale.

13. Bicyclette (17),
comprenant
un cadre (18),
au moins deux roues (19) montées de manière rotative sur le cadre (18),
un système d'entraînement à pédales (4) qui présente deux pédales (27) supportées de manière rotative et montées sur le cadre,
un entraînement auxiliaire (20) pouvant être connecté au besoin, pour l'entraînement motorisé auxiliaire de la bicyclette (17),
et un agencement de transmission (1) selon l'une quelconque des revendications 1 à 11.

14. Bicyclette selon la revendication 13,
**caractérisée en ce que**
l'entraînement auxiliaire (20) est un moteur électrique et/ou un moteur à combustion interne.
